# EUROPEAN PATENT SPECIFICATION

(11) **EP 1 495 914 B1**
(45) Date of publication and mention of the grant of the patent: **08.03.2006**
(21) Application number: 04015762.0
(22) Date of filing: 05.07.2004
(51) Int. Cl.: B60R 13/10, B60Q 1/48

(54) **Vehicle license plate holder with supports for sensing devices such as sensors, transducers, microcameras or the like**
Kennzeichnenhalter für Fahrzeug mit Sensor- Microkamerahalterungen
Support de plaque d'immatriculation de véhicule avec emplacements pour capteur ou microcamera

(30) Priority: 11.07.2003 IT MO20030024
(43) Date of publication of application: 12.01.2005
(73) Proprietor: Meta System S.p.A., 42100 Reggio Emilia (IT)
(72) Inventor: Simonazzi, Giuseppe, 42100 Reggio Emilia (IT)
(74) Representative: Modiano, Micaela Nadia

(56) References cited:
- EP-A- 1 197 395
- EP-A- 1 380 470
- FR-A- 2 735 734

## Description

The present invention relates to a vehicle license plate holder with supports for sensing devices such as sensors, transducers, microcameras or the like, according to the preamble of claim 1. Such a license plate holder is known from EP 1 380 470.

Vehicle license plate holders are known which are essentially constituted by a substantially flat frame body provided with means for coupling to the body of a vehicle or to a bumper of a car or to the fender of a motorcycle and with a receptacle for placing a license plate, which is formed on one of its two opposite faces and at which there are means for anchoring said license plate to the frame body.

Known license plate holders include holders that are termed "universal" because they are provided with anchoring means that can be adapted to license plates having different shapes and/or dimensions: the anchoring means can be constituted for example by a plurality of holes or slots having various shapes and distributed on the bottom of the receptacle for the license plate, in order to insert in said holes or slots threaded means for locking said license plate, and/or by elastic press-tabs and/or ribs or teeth of a detachable type, by eliminating which it is possible to vary the perimeter that delimits the license plate receptacle.

License plate holders of the universal and non-universal type are known which are provided with supports for sensing devices, such as for example sensors, transducers, microcameras or the like, which are suitable for example to identify and locate objects that lie outside the vehicles, to measure the relative distance between said objects, or others, and are part of signaling, alarm, control or safety equipment with which said vehicles can be equipped in order to assist their drivers for example in maneuvers for parking, reversing, driving in critical weather conditions with low-visibility (fog, rain, et cetera).

Known supports are generally distributed along the outer perimetric portion of the frame body and can be formed monolithically with it or in separate tabs that can be connected thereto by way of fixing means.

Known types of support are constituted by hollow rounded elements (such as rings) or cylindrical ones (such as capsules), the main or longitudinal axis of which is oriented at right angles to the plane of arrangement of the frame body of the license plate holder; the field of action of the sensing devices is substantially constituted by the region that lies in front of the respective supports.

However, these last known license plate holders, while allowing to fit sensing devices also to vehicles for which the manufacturer does not provide them as standard or optional accessories, have drawbacks, including the fact that the breadth and shape of the field of action of the sensing devices that they support are limited and in particular cannot be compared to those of the fields of action of the sensing devices provided by vehicle manufacturers as standard or optional accessories.

It is noted in fact that vehicle manufacturers can provide, during design, for a plurality of seats for containing the sensing devices, which are variously orientated and distributed not only proximate to the license plate holder but also for example along the front and/or rear bumper, so that the field of action of said sensing devices includes both the regions that lie ahead of the front part or behind the rear of the vehicles, and their corner regions.

The field of action of the sensing devices supported by known license plate holders, by being essentially constituted by the region that lies in front of the respective supports and in view of their orientation, instead substantially coincides with the region that lies ahead of the front part or behind the rear of the vehicle, depending on where the license plate holders are coupled; therefore, the corner regions of the vehicles, which are also the regions that are less clearly visible to drivers, remain in shadow, i.e., are excluded from the field of action.

Accordingly, known license plate holders do not allow to detect any external objects that, during the motion or maneuvering of the vehicle, might be in said corner regions, making a collision with them probable if not inevitable.

The aim of the present invention is to eliminate the drawbacks noted above of known license plate holders, by providing a vehicle license plate holder with supports for sensing devices, such as sensors, transducers, microcameras or the like, that allows to improve the shape and increase the breadth of the field of action of said sensing devices, extending them also to the corner regions of said vehicles.

Within this aim, an object of the present invention is to provide a vehicle license plate holder that is simple, relatively easy to provide in practice, safe in use, effective in operation, and has a relatively low cost.

This aim and this and other objects that will become better apparent hereinafter are achieved by the present vehicle license plate holder with supports for sensing devices, such as sensors, transducers, microcameras or the like, comprising a substantially flat frame body that is provided with means for coupling to a vehicle, a license plate receptacle formed on one of the two opposite faces of said frame body, means for anchoring said license plate to said frame body, and at least one support for at least one sensing device, such as a sensor, a transducer, a microcamera or the like, which is formed proximate to the perimetric portion of said frame body, whereby the vehicle license plate holder comprises at least one pair of said supports, each of which is constituted by a hollow element for containing a respective sensing device, said supports being arranged along respective axes that are not mutually parallel and are oblique with respect to the plane of arrangement of said frame body, the axis of one of said supports converging toward said frame body, the sensing field of the respective device being constituted substantially by the region that lies substantially in front of said frame body, the axis of the other one of said supports diverging from said frame body, the sensing field of the respective device being constituted substantially by a corner region of said vehicle.

Further characteristics and advantages of the present invention will become better apparent from the following detailed description of a preferred but not exclusive embodiment of a vehicle license plate holder with supports for sensing devices such as sensors, transducers, microcameras or the like, illustrated by way of nonlimiting example in the accompanying drawings, wherein:

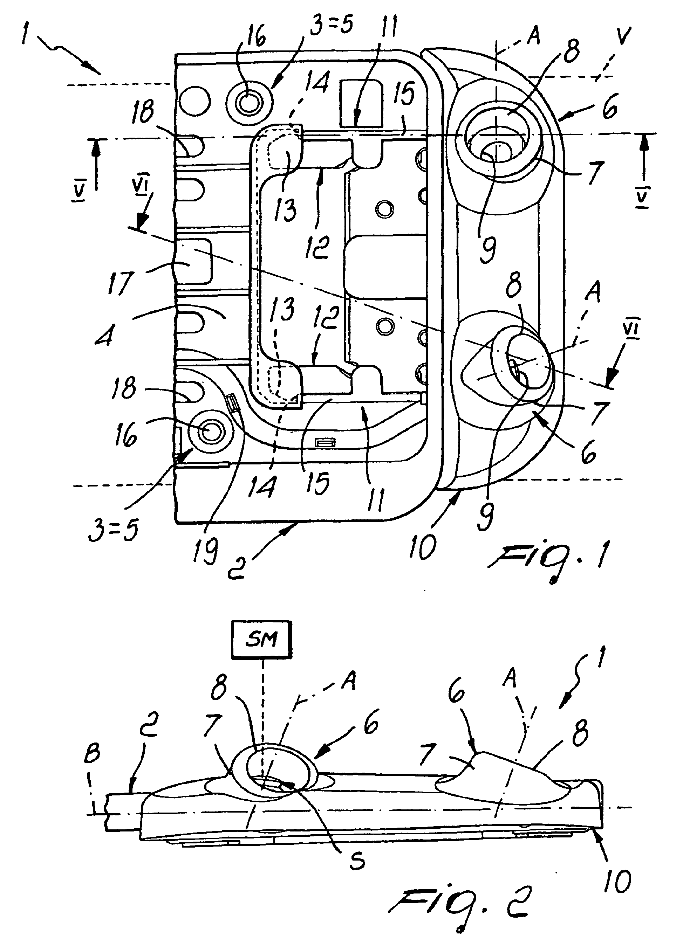

Figure 1 is a schematic front view of an end portion of a license plate holder according to the invention;

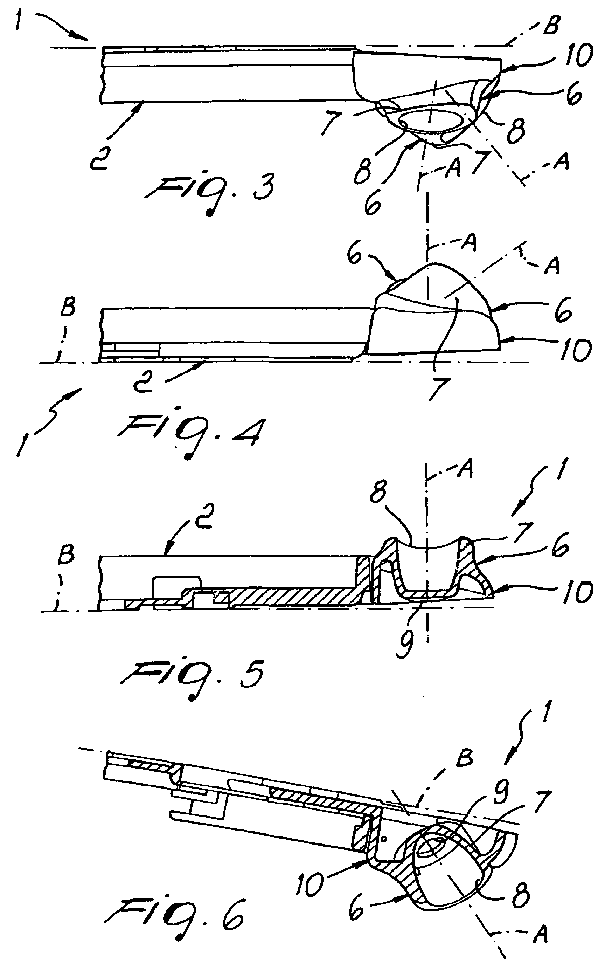

Figure 2 is a schematic side view of the end portion of the license plate holder of Figure 1;
Figure 3 is a schematic top view of the end portion of the license plate holder of Figure 1;
Figure 4 is a schematic bottom view of the end portion of the license plate holder of Figure 1;
Figure 5 is a schematic sectional view, taken along the line V-V, of the end portion of the license plate holder of Figure 1;
Figure 6 is a schematic sectional view, taken along the line VI-VI, of the end portion of the license plate holder of Figure 1.

With reference to the figures, the reference numeral 1 generally designates a vehicle license plate holder with supports for sensing devices such as sensors, transducers, microcameras or the like.

The license plate holder 1 comprises a frame body 2, which is substantially flat and is provided with means 3 for coupling to the body or to a front or rear bumper V of a vehicle or to a fender of a motorcycle.

A receptacle 4 for a license plate, not shown, is provided on one of the two opposite faces of the frame body 2; the license plate is fixed to the frame body 2 by way of anchoring means 5.

One or more pairs of supports 6 for sensing devices, such as sensors, transducers, microcameras or the like, which are parts of signaling, safety, alarm or control devices of a conventionally known type, are formed along the perimetric portion of the frame body 2.

Each support 6 is constituted by a hollow element 7 for containing a sensing device S; the main axis A of each hollow element 7 intersects the plane of arrangement B of the frame body 2 along a direction that is oblique thereto.

The hollow element 7 is substantially shaped like a solid of rotation generated about the main axis of symmetry A: in a preferred embodiment, the hollow element 7 is frustum-shaped, with the larger end directed toward the outside of the vehicle and the smaller end, for supporting the sensing device, directed toward the vehicle.

Respective openings 8 and 9 are formed at each opposite end or face of the hollow element 7; the opening 8, formed at the face that is directed toward the outside of the vehicle, connects the sensing device accommodated in the hollow element 7 to the outside environment, while the opening 9, formed at the end directed toward the vehicle, allows the passage of the cables for connecting the sensing device to the apparatus of which it is a part or to a power supply.

The frame body 2 is substantially shaped like an elongated right quadrangle, at two opposite sides of which there is a respective pair of supports 6; the main axes A of the hollow elements 7 of the supports 6 of each of the two pairs are mutually non-parallel, so that the fields of action of the sensing devices accommodated respectively therein are oriented in different directions.

In particular, the axis A of one of the two hollow elements 7 (support 6) of each pair converges toward the frame body 2, the sensing field of the respective device being essentially constituted by the region that lies substantially in front of said frame body, while the axis A of the other of the hollow elements 7 (support 6) of the same pair diverges from the frame body 2 toward the outside thereof, the sensing field of the respective device being substantially constituted by a corner region of the vehicle.

Conveniently, the axes A of the two supports 6 of one pair intersect a line that is substantially parallel to one side of the frame body 2 and the two supports 6 of the same pair are arranged proximate to two consecutive corners of the frame body 2.

By arranging two pairs of supports 6 at two opposite sides of the frame body 2, the total field of action, which is the sum of the fields of action of the sensing devices accommodated in the individual supports 6, opens out so as to include, in addition to the region that lies in front of the frame body 2, also the peripheral regions (upper, lower and lateral) thereof, thus allowing to locate even any external objects that are present in the vicinity of the corner regions of the vehicles.

However, alternative embodiments, in which the pairs of supports 6 are provided in a different number and/or are distributed along the entire perimetric portion of the frame body 2 or along two consecutive sides thereof, are not excluded.

In the illustrated embodiment, the license plate holder 1 comprises one or more tabs 10 that can be associated with or connected to the perimetric portion of the frame body 2 and in each of which there are two supports 6, the respective hollow elements 7 of which are at least partially recessed therein.

Conveniently, the tabs 10 are associable with or connectable to the opposite ends of the frame body 2.

The tabs 10 are rigidly associated with the frame body 2 by way of (detachable) temporary fixing means 11, for example of the snap-acting type or interlocking type or of the threaded type.

Conveniently, the fixing means 11 can coincide with the means 3 for coupling the frame body 2 to the vehicle and/or with the means 5 for anchoring the license plate to the frame body 2.

In the figures cited above, the fixing means 11 are of the snap-acting (or fixing) type and comprise two elastic wings 12 that protrude so that they are substantial mutually parallel from one side of the tab 10 and are provided with at least one respective retention tooth 13, which is suitable to engage by abutment against corresponding locators 14 formed along respective straight guides 15 for the sliding of the elastic wings 12, which are formed in the frame body 2 so that they are substantially mutually parallel.

In an alternative embodiment, not shown, the pairs of supports 6, i.e., of hollow elements 7, can be integrated in the frame body 2 (along its sides) so as to be monolithic with it and be partially recessed therein.

Conveniently, the means 5 for anchoring the license plate to the frame body 2 can coincide with the means 3 for coupling the frame body 2 to the vehicle and can be constituted for example by holes 16 for the insertion of threaded means.

The anchoring means 5 can be advantageously of the universal type and be able to adapt to license plates having different shapes and/or dimensions; in particular, they can comprise a plurality of openings, such as holes 17, slots 18 or the like, for the insertion of the threaded means that anchor the license plate to the frame body 2, which are variously shaped and distributed on the bottom of the receptacle 4.

Finally, the license plate holder 1 comprises universal means for positioning license plates having different shapes and/or dimensions, which are constituted by detachable locators, such as teeth 19, ribs, protrusions, tabs or the like, which are formed in the receptacle 4.

The selective removal of said locators clears different positioning areas for respective license plates having different shapes and/or surface extensions.

Advantageously, the sensing device contained in the support 6 of each pair whose axis A diverges from the frame body 2 is associable with storing means SM with a program stored for processing the data detected thereby with respect to the corner of the vehicle; the distance of the objects located outside the vehicle detected by said device is calculated starting from the corner of the vehicle that is taken as reference point.

In practice it has been found that the described invention achieves the proposed aim and object.

The license plate holder according to the invention in fact allows to equip also vehicles for which the manufacturer does not provide sensing devices as standard or optional accessories with sensing devices whose total field of action has an improved shape and extent.

The license plate holder according to the invention allows, in particular, to increase the extent of the field of action of the sensing devices so as to include, in addition to the region that lies ahead of the front part or behind the rear of the vehicle, also the corner regions of the vehicles.

The license plate holder according to the invention therefore allows to also detect the presence of any external objects located proximate to the corner regions of the vehicles, facilitating and increasing safety in the maneuvers of the drivers of said vehicles.

The license plate holder according to the invention can be applied both to vehicles being manufactured and to already-manufactured and commercially available vehicles.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A vehicle license plate holder with supports for sensing devices, such as sensors, transducers, microcameras or the like, comprising a substantially flat frame body (2) that is provided with means (3) for coupling to a vehicle (V), a license plate receptacle (4) formed on one of the two opposite faces of said frame body (2), means (5) for anchoring a license plate to said frame body (2), and at least one support (6) for at least one sensing device (S), such as a sensor, a transducer, a microcamera or the like, which is formed proximate to the perimetric portion of said frame body (2), whereby the vehicle license plate holder comprises at least one pair of said supports (6), each support (6) being constituted by a hollow element (7) for containing a respective sensing device, said supports (6) being arranged along respective axes (A) that are non-parallel and are oblique with respect to the plane of arrangement (B) of said frame body (2), **characterized in that** the axis (A) of one of said supports (6) converges toward said frame body (2), the sensing field of the respective sensing device (S) being constituted essentially by the region that lies substantially in front of said frame body (2), the axis (A) of the other one of said supports (6) diverging from said frame body (2), the sensing field of the respective device (S) being constituted substantially by a corner region of the vehicle (V).

2. The license plate holder according to claim 1, **characterized in that** said hollow element (7) is substantially shaped like a solid of rotation generated about said axis (A).

3. The license plate holder according to one or more of the preceding claims, **characterized in that** said hollow element (7) is substantially frustum-shaped.

4. The license plate holder according to one or more of the preceding claims, **characterized in that** said hollow element (7) comprises openings (8,9) formed at opposite ends or faces thereof.

5. The license plate holder according to one or more of the preceding claims, **characterized in that** said frame body (2) is substantially shaped like a right quadrangle.

6. The license plate holder according to one or more of the preceding claims, **characterized in that** the axes (A) of the supports (6) of said pair of supports intersect a line that is substantially parallel to one side of said frame body (2).

7. The license plate holder according to one or more of the preceding claims, **characterized in that** at least one of the supports (6) of said pair of supports is formed proximate to a corner of said frame body (2).

8. The license plate holder according to one or more of the preceding claims, **characterized in that** the supports (6) of said pair of supports are formed proximate to two consecutive corners of said frame body (2).

9. The license plate holder according to one or more of the preceding claims, **characterized in that** it comprises at least two pairs of said supports (6), which are provided at two opposite sides of said frame body (2).

10. The license plate holder according to one or more of the preceding claims, **characterized in that** it comprises at least two pairs of said supports (6), which are provided at two adjacent sides of said frame body (2).

11. The license plate holder according to one or more of the preceding claims, **characterized in that** it comprises a plurality of said pairs of supports (6), which are distributed along the perimetric portion of said frame body (2).

12. The license plate holder according to one or more of the preceding claims, **characterized in that** said supports (6) are integrated with said frame body (2) and are monolithic therewith.

13. The license plate holder according to one or more of the preceding claims, **characterized in that** said supports (6) are at least partially recessed in said frame body (2).

14. The license plate holder according to one or more of the preceding claims, **characterized in that** it comprises at least one tab (10), which is associable with the perimetric portion of said frame body (2) and in which at least one of said pairs of supports (6) is formed.

15. The license plate holder according to one or more of the preceding claims, **characterized in that** said supports (6) are embedded at least partially in said tab (10).

16. The license plate holder according to one or more of the preceding claims, **characterized in that** said tab (10) is associable with the opposite ends of said frame body (2).

17. The license plate holder according to one or more of the preceding claims, **characterized in that** it comprises means (11) for fixing said tab (10) to said frame body (2).

18. The license plate holder according to one or more of the preceding claims, **characterized in that** said fixing means (11) are of a temporary type.

19. The license plate holder according to one or more of the preceding claims, **characterized in that** said fixing means (11) are of the snap-acting type.

20. The license plate holder according to one or more of the preceding claims, **characterized in that** said fixing means (11) of the snap-acting type comprise two elastic wings (12) that protrude from said tab (10) so as to be substantially mutually parallel and are provided with at least one respective retention tooth (13) that is adapted to engage by abutment against corresponding locators (14) formed along respective straight guides (15) for the sliding of said wings (12), which are formed, so as to be substantially mutually parallel, in said frame body (2).

21. The license plate holder according to one or more of the preceding claims, **characterized in that** said fixing means (11) are of the interlocking type.

22. The license plate holder according to one or more of the preceding claims, **characterized in that** said fixing means (11) are of the threaded type.

23. The license plate holder according to one or more of the preceding claims, **characterized in that** said fixing means (11) coincide with said anchoring means (5).

24. The license plate holder according to one or more of the preceding claims, **characterized in that** said fixing means (11) coincide with said coupling means (3).

25. The license plate holder according to one or more of the preceding claims, **characterized in that** said coupling means (3) coincide with said anchoring means (5).

26. The license plate holder according to one or more of the preceding claims, **characterized in that** said coupling means (3), or said anchoring means (5), or both comprise threaded means.

27. The license plate holder according to one or more of the preceding claims, **characterized in that** said anchoring means (5) are of a universal type.

28. The license plate holder according to one or more of the preceding claims, **characterized in that** said anchoring means (5) comprise a plurality of openings (16), such as holes (17), slots (18) or the like, for the insertion of said threaded means, and are formed on the bottom of said receptacle (4).

29. The license plate holder according to one or more of the preceding claims, **characterized in that** said receptacle (4) comprises universal means (19) for positioning license plates having different shapes and/or dimensions.

30. The license plate holder according to one or more of the preceding claims, **characterized in that** said universal positioning means comprise detachable locators (19), such as ridges, protrusions, tabs, teeth or the like, which are formed in said receptacle (4), the selective removal of said locators (19) opening positioning areas for respective license plates having a different shape and/or surface extension.

31. The license plate holder according to one or more of the preceding claims, **characterized in that** the sensing device (S) contained in the support (6) of said pair provided with an axis that diverges from said frame body (2) is associable with storing means and with a stored program (SM) for processing the data acquired thereby with respect to said corner of the vehicle.

## Patentansprüche

1. Kennzeichenhalter für einen Fahrzeug mit Halterungen für Fühler wie Sensoren, Wandler, Mikrokameras oder dergleichen, umfassend einen im Wesentlichen flachen Rahmenkörper (2), der mit Mitteln (3) zum Ankuppeln an ein Fahrzeug (V), einem Kennzeichenbehälter (4), der an einem der zwei gegenüberliegenden Flächen des Rahmenkörpers (2) angeformt ist, Mitteln (5) zum Verankern eines Kennzeichens an den Rahmenkörper (2), und mindestens einer Halterung (6) für mindestens einen Fühler (S), wie zum Beispiel einen Sensor, einen Wandler, eine Mikrokamera oder dergleichen, versehen ist, wobei die mindestens eine Halterung (6) in der Nähe des Umfangsbereichs des Rahmenkörpers (2) ausgebildet ist, wobei
der Kennzeichenhalter mindestens ein Paar Halterungen (6) umfasst, wobei jede Halterung (6) durch ein Hohlelement (7) gebildet ist, das einen entsprechenden Fühler aufnehmen soll,
wobei die Halterungen (6) längs entsprechenden Achsen (A) angeordnet sind, die nicht parallel und in Bezug auf die Ebene der Anordnung (B) des Rahmenkörpers (2) geneigt angeordnet sind,
**dadurch gekennzeichnet, dass**
die Achse (A) einer der Halterungen (6) in Richtung auf den Rahmenkörper (2) zusammenläuft, wobei das Sensorfeld des entsprechenden Fühlers (S) im Wesentlichen durch den Bereich gebildet ist, der im Wesentlichen vor dem Rahmenlcörper (2) liegt, und wobei
die Achse (A) der anderen Halterung (6) von dem Rahmenkörper (2) ausgehend auseinanderläuft, wobei das Sensorfeld des entsprechenden Fühlers (S) im Wesentlichen durch einen Eckbereich des Fahrzeugs (V) gebildet ist.

2. Kennzeichenhalter nach Anspruch 1, **dadurch gekennzeichnet, dass** das Hohlelement (7) im Wesentlichen wie ein Drehkörper geformt ist, der um die Achse (A) erzeugt wird.

3. Kennzeichenhalter nach mindestens einem der hervorgehenden Ansprüche, **dadurch gekennzeichnet, dass** das Hohlelement (7) im Wesentlichen stumpfförmig ist.

4. Kennzeichenhalter nach mindestens einem der hervorgehenden Ansprüche, **dadurch gekennzeichnet, dass** das Hohlelement (7) Öffnungen (8, 9) umfasst, die an gegenüberliegenden Enden oder Flächen desselben gebildet sind.

5. Kennzeichenhalter nach mindestens einem der hervorgehenden Ansprüche, **dadurch gekennzeichnet, dass** der Rahmenkörper (2) im Wesentlichen wie ein Rechteck geformt ist.

6. Kennzeichenhalter nach mindestens einem der hervorgehenden Ansprüche, **dadurch gekennzeichnet, dass** die Achsen (A) der Halterungen (6) des Halterungspaares sich mit einer Linie kreuzen, die im Wesentlichen parallel zu einer Seite des Rahmenkörpers (2) verläuft.

7. Kennzeichenhalter nach mindestens einem der hervorgehenden Ansprüche, **dadurch gekennzeichnet, dass** mindestens eine Halterung (6) des Halterungspaares neben einer Ecke des Rahmenkörpers (2) gebildet ist.

8. Kennzeichenhalter nach mindestens einem der hervorgehenden Ansprüche, **dadurch gekennzeichnet, dass** die Halterungen (6) des Halterungspaares neben zwei aufeinander folgenden Ecken des Rahmenkörpers (2) gebildet sind.

9. Kennzeichenhalter nach mindestens einem der hervorgehenden Ansprüche, **dadurch gekennzeichnet, dass** er mindestens zwei Paare Halterungen (6) umfasst, die an zwei gegenüberliegenden Seiten des Rahmenkörpers (2) vorgesehen sind.

10. Kennzeichenhalter nach mindestens einem der hervorgehenden Ansprüche, **dadurch gekennzeichnet, dass** er mindestens zwei Paare Halterungen (6) umfasst, die an zwei nebeneinanderliegenden Seiten des Rahmenkörpers (2) vorgesehen sind.

11. Kennzeichenhalter nach mindestens einem der hervorgehenden Ansprüche, **dadurch gekennzeichnet, dass** er eine Vielzahl von Halterungspaaren (6) umfasst, die längs des Umfangsbereichs des Rahmenkörpers (2) verteilt sind.

12. Kennzeichenhalter nach mindestens einem der hervorgehenden Ansprüche, **dadurch gekennzeichnet, dass** die Halterungen (6) mit dem Rahmenkörper (2) integriert sind und eine Einheit mit ihm bilden.

13. Kennzeichenhalter nach mindestens einem der hervorgehenden Ansprüche, **dadurch gekennzeichnet, dass** die Halterungen (6) mindestens teilweise in dem Rahmenkörper (2) zurückversetzt sind.

14. Kennzeichenhalter nach mindestens einem der hervorgehenden Ansprüche, **dadurch gekennzeichnet, dass** er mindestens eine Nase (10) umfasst, die dem Umfangsbereich des Rahmenkörpers (2) zugeordnet werden kann, und in der mindestens eines der Halterungspaare (6) gebildet ist.

15. Kennzeichenhalter nach mindestens einem der hervorgehenden Ansprüche, **dadurch gekennzeichnet, dass** die Halterungen (6) mindestens teilweise in der Nase (10) eingelassen sind.

16. Kennzeichenhalter nach mindestens einem der hervorgehenden Ansprüche, **dadurch gekennzeichnet, dass** die Nase (10) den gegenüberliegenden Enden des Rahmenkörpers (2) zugeordnet werden kann.

17. Kennzeichenhalter nach mindestens einem der hervorgehenden Ansprüche, **dadurch gekennzeichnet, dass** er Mittel (11) zum Befestigen der Nase (10) an dem Rahmenkörper (2) umfasst.

18. Kennzeichenhalter nach mindestens einem der hervorgehenden Ansprüche, **dadurch gekennzeichnet, dass** die Ausführung der Befestigungsmittel (11) eine ist, die zeitweise befestigt werden kann.

19. Kennzeichenhalter nach mindestens einem der hervorgehenden Ansprüche, **dadurch gekennzeichnet, dass** die Ausführung der Befestigungsmittel (11) eine ist, die eine Schnappwirkung veranlasst.

20. Kennzeichenhalter nach mindestens einem der hervorgehenden Ansprüche, **dadurch gekennzeichnet, dass** die Ausführung der Befestigungsmittel (11), die eine Schnappwirkung veranlasst, zwei elastische Flügel (12) umfasst, die von der Nase (10) derart hervorstehen, dass sie im Wesentlichen gegenseitig parallel sind, und die jeweils mit mindestens einem Rückhaltezahn (13) versehen sind, der so ausgebildet ist, dass er durch Anliegen an entsprechenden Aufnahmeeinrichtungen (14) eingreift, die an jeweiligen geradlinigen Führungen (15) entlang gebildet sind, die das Gleiten der Flügel (12) ermöglichen, die so gebildet sind, dass sie sich im Wesentlichen gegenseitig parallel zueinander in dem Rahmenkörper (2) befinden.

21. Kennzeichenhalter nach mindestens einem der hervorgehenden Ansprüche, **dadurch gekennzeichnet, dass** die Befestigungsmittel (11) so ausgeführt sind, dass sie sich miteinander verzahnen.

22. Kennzeichenhalter nach mindestens einem der hervorgehenden Ansprüche, **dadurch gekennzeichnet, dass** die Ausführung der Befestigungsmittel (11) eine mit einem Gewinde versehene Ausführung ist.

23. Kennzeichenhalter nach mindestens einem der hervorgehenden Ansprüche, **dadurch gekennzeichnet, dass** die Befestigungsmittel (11) sich mit den Verankerungsmitteln (5) decken.

24. Kennzeichenhalter nach mindestens einem der hervorgehenden Ansprüche, **dadurch gekennzeichnet, dass** die Befestigungsmittel (11) sich mit den Ankupplungsmitteln (3) decken.

25. Kennzeichenhalter nach mindestens einem der hervorgehenden Ansprüche, **dadurch gekennzeichnet, dass** die Ankupplungsmittel (3) sich mit den Verankerungsmitteln (5) decken.

26. Kennzeichenhalter nach mindestens einem der hervorgehenden Ansprüche, **dadurch gekennzeichnet, dass** die Ankupplungsmittel (3) oder die Befestigungsmittel (11) oder beides Mittel umfassen, die mit einem Gewinde versehen sind.

27. Kennzeichenhalter nach mindestens einem der hervorgehenden Ansprüche, **dadurch gekennzeichnet, dass** die Ausführung der Verankerungsmittel (5) eine Ausführung der universalen Art ist.

28. Kennzeichenhalter nach mindestens einem der hervorgehenden Ansprüche, **dadurch gekennzeichnet, dass** die Verankerungsmittel (5) zum Einsetzen der mit einem Gewinde versehenen Mittel eine Vielzahl von Öffnungen (16) wie Löcher (17), Schlitzen (18) oder dergleichen sufweisen, und dass sie an der Unterseite des Behälters (4) gebildet sind.

29. Kennzeichenhalter nach mindestens einem der hervorgehenden Ansprüche, **dadurch gekennzeichnet, dass** der Behälter (4) Universalmittel (19) zum Positionieren von Kennzeichen mit verschiedenen Formen und/oder Größen umfasst.

30. Kennzeichenhalter nach mindestens einem der hervorgehenden Ansprüche, **dadurch gekennzeichnet, dass** die Universalpositionierungsmittel trennbare Aufnahmeeinrichtungen (19) wie Stege, Vorsprünge, Nasen, Zähne oder dergleichen umfassen, die in dem Behälter (4) gebildet sind und deren selektive Entfernung Positionierbereiche für entsprechende Autokennzeichen mit verschiedener Größe und/oder verschiedener Flächenerweiterung öffnet.

31. Kennzeichenhalter nach mindestens einem der hervorgehenden Ansprüche, **dadurch gekennzeichnet, dass** der Fühler (S), der in der Halterung (6) des Halterungspaares, das mit einer Achse versehen ist, die vom dem Rahmenkörper (2) ausgehend auseinanderläuft, Speichermitteln und einem gespeicherten Programm (SM) zugeordnet werden kann, zum Verarbeiten der die Ecke des Fahrzeugs betreffenden Daten, die **dadurch** erhalten werden.

## Revendications

1. Support de plaque d'immatriculation de véhicule avec des appuis pour des dispositifs de détection tels que des capteurs, des transducteurs, des microcaméras ou similaire, comprenant un corps formant cadre (2) sensiblement plat qui est muni de moyens (3) de couplage à un véhicule (V), un réceptacle de plaque d'immatriculation (4) formé sur une des deux faces opposées dudit corps formant cadre (2), des moyens (5) destinés à ancrer une plaque d'immatriculation audit corps formant cadre (2) et au moins un appui (6) pour au moins un dispositif de détection (S) tel qu'un capteur, un transducteur, une microcaméra ou similaire, qui est formé à proximité de la partie périphérique dudit corps formant cadre (2), de sorte que le support de plaque d'immatriculation de véhicule comprend au moins une paire desdits appuis (6), chaque appui (6) étant constitué d'un élément creux (7) destiné à contenir un dispositif de détection respectif, lesdits appuis (6) étant disposés le long d'axes respectifs (A) qui sont non parallèles et qui sont obliques par rapport au plan d'agencement (B) dudit corps formant cadre (2), **caractérisé en ce que** l'axe (A) d'un desdits appuis (6) converge vers ledit corps formant cadre (2), le champ de détection du dispositif de détection respectif (S) consistant essentiellement en la zone située sensiblement à l'avant dudit corps formant cadre (2), l'axe (A) de l'autre desdits appuis (6) divergeant dudit corps formant cadre (2), le champ de détection du dispositif respectif (S) consistant sensiblement en une zone d'angle du véhicule (V).

2. Support de plaque d'immatriculation selon la revendication 1, **caractérisé en ce que** ledit élément creux (7) est sensiblement sous forme d'un solide de rotation généré autour dudit axe (A).

3. Support de plaque d'immatriculation selon l'une quelconque ou plusieurs des revendications précédentes, **caractérisé en ce que** ledit élément creux (7) est de forme sensiblement tronconique.

4. Support de plaque d'immatriculation selon l'une quelconque ou plusieurs des revendications précédentes, **caractérisé en ce que** ledit élément creux (7) comprend des ouvertures (8, 9) formées à des extrémités ou des faces opposées de celui-ci.

5. Support de plaque d'immatriculation selon l'une quelconque ou plusieurs des revendications précédentes, **caractérisé en ce que** ledit corps formant cadre (2) est sensiblement sous forme de quadrilatère rectangulaire.

6. Support de plaque d'immatriculation selon l'une quelconque ou plusieurs des revendications précédentes, **caractérisé en ce que** les axes (A) des appuis (6) de ladite paire d'appuis coupent une ligne qui est sensiblement parallèle à un côté dudit corps formant cadre (2).

7. Support de plaque d'immatriculation selon l'une quelconque ou plusieurs des revendications précédentes, **caractérisé en ce qu'**au moins un des appuis (6) de ladite paire d'appuis est formé à proximité d'un coin dudit corps formant cadre (2).

8. Support de plaque d'immatriculation selon l'une quelconque ou plusieurs des revendications précédentes, **caractérisé en ce que** les appuis (6) de ladite paire d'appuis sont formés à proximité de deux coins successifs dudit corps formant cadre (2).

9. Support de plaque d'immatriculation selon l'une quelconque ou plusieurs des revendications précédentes, **caractérisé en ce qu'**il comprend au moins deux paires desdits appuis (6), qui sont prévues à des côtés opposés dudit corps formant cadre (2).

10. Support de plaque d'immatriculation selon l'une quelconque ou plusieurs des revendications précédentes, **caractérisé en ce qu'**il comprend au moins deux paires desdits appuis (6), qui sont prévues à deux côtés adjacents dudit corps formant cadre (2).

11. Support de plaque d'immatriculation selon l'une quelconque ou plusieurs des revendications précédentes, **caractérisé en ce qu'**il comprend une pluralité desdites paires d'appuis (6), qui sont réparties le long de la partie périphérique dudit corps formant cadre (2).

12. Support de plaque d'immatriculation selon l'une quelconque ou plusieurs des revendications précédentes, **caractérisé en ce que** lesdits appuis (6) sont intégrés audit corps formant cadre (2) et **en ce qu'**ils forment un seul bloc avec celui-ci.

13. Support de plaque d'immatriculation selon l'une quelconque ou plusieurs des revendications précédentes, **caractérisé en ce que** lesdits appuis (6) sont au moins en partie enfoncés dans ledit corps formant cadre (2).

14. Support de plaque d'immatriculation selon l'une quelconque ou plusieurs des revendications précédentes, **caractérisé en ce qu'**il comprend au moins une patte qui peut être associée à la partie périphérique dudit corps formant cadre (2), et dans laquelle est formée au moins une desdites paires d'appuis (6).

15. Support de plaque d'immatriculation selon l'une quelconque ou plusieurs des revendications précédentes, **caractérisé en ce que** lesdits appuis (6) sont au moins partiellement incorporés dans ladite patte (10).

16. Support de plaque d'immatriculation selon l'une quelconque ou plusieurs des revendications précédentes, **caractérisé en ce que** ladite patte (10) peut être associée aux extrémités opposées dudit corps formant cadre (2).

17. Support de plaque d'immatriculation selon l'une quelconque ou plusieurs des revendications précédentes, **caractérisé en ce qu'**il comprend des moyens (11) destinés à fixer ladite patte (10) audit corps formant cadre (2).

18. Support de plaque d'immatriculation selon l'une quelconque ou plusieurs des revendications précédentes, **caractérisé en ce que** lesdits moyens de fixation (11) sont de type provisoire.

19. Support de plaque d'immatriculation selon l'une quelconque ou plusieurs des revendications précédentes, **caractérisé en ce que** lesdits moyens de fixation (11) sont du type à enclenchement enclipsable.

20. Support de plaque d'immatriculation selon l'une quelconque ou plusieurs des revendications précédentes, **caractérisé en ce que** lesdits moyens de fixation (11) du type à enclenchement enclipsable comprennent deux ailes élastiques (12) qui font saillie depuis ladite patte (10) de façon à être sensiblement mutuellement parallèles et qui sont munies d'au moins une dent de retenue respective (13) qui est adaptée pour s'engager par butée contre des positionneurs correspondants (14) formés le long de guides rectilignes respectifs (15) destinés au coulissement desdites ailes (12), qui sont formées, de manière à être sensiblement mutuellement parallèles, dans ledit corps formant cadre (2).

21. Support de plaque d'immatriculation selon l'une quelconque ou plusieurs des revendications précédentes, **caractérisé en ce que** lesdits moyens de fixation (11) sont du type à emboîtement.

22. Support de plaque d'immatriculation selon l'une quelconque ou plusieurs des revendications précédentes, **caractérisé en ce que** lesdits moyens de fixation (11) sont du type fileté.

23. Support de plaque d'immatriculation selon l'une quelconque ou plusieurs des revendications précédentes, **caractérisé en ce que** lesdits moyens de fixation (11) coïncident avec lesdits moyens d'ancrage (5).

24. Support de plaque d'immatriculation selon l'une quelconque ou plusieurs des revendications précédentes, **caractérisé en ce que** lesdits moyens de fixation (11) coïncident avec lesdits moyens de couplage (3).

25. Support de plaque d'immatriculation selon l'une quelconque ou plusieurs des revendications précédentes, **caractérisé en ce que** lesdits moyens de couplage (3) coïncident avec lesdits moyens d'ancrage (5).

26. Support de plaque d'immatriculation selon l'une quelconque ou plusieurs des revendications précédentes, **caractérisé en ce que** lesdits moyens de couplage (3) ou lesdits moyens d'ancrage (5) ou les tous les deux, comprennent des moyens filetés.

27. Support de plaque d'immatriculation selon l'une quelconque ou plusieurs des revendications précédentes, **caractérisé en ce que** lesdits moyens d'ancrage (5) sont d'un type universel.

28. Support de plaque d'immatriculation selon l'une quelconque ou plusieurs des revendications précédentes, **caractérisé en ce que** lesdits moyens d'ancrage (5) comprennent une pluralité d'ouvertures (16) telles que des orifices (17), des fentes (18) ou similaire, pour l'insertion desdits moyens filetés, et **en ce qu'**ils sont formés au fond dudit réceptacle (4).

29. Support de plaque d'immatriculation selon l'une quelconque ou plusieurs des revendications précédentes, **caractérisé en ce que** ledit réceptacle (4) comprend des moyens universels (19) destinés à positionner des plaques d'immatriculation de formes et/ou de dimensions différentes.

30. Support de plaque d'immatriculation selon l'une quelconque ou plusieurs des revendications précédentes, **caractérisé en ce que** lesdits moyens de positionnement universels comprennent des positionneurs amovibles (19), tels que des crêtes, des saillies, des pattes, des dents ou similaire, qui sont formés dans ledit réceptacle (4), le retrait sélectif desdits positionneurs (19) ouvrant des zones de positionnement pour des plaques d'immatriculation respectives ayant une forme et/ou une étendue de surface différente(s).

31. Support de plaque d'immatriculation selon l'une quelconque ou plusieurs des revendications précédentes, **caractérisé en ce que** le dispositif de détection (S) contenu dans l'appui (6) de ladite paire munie d'un axe qui diverge dudit corps formant cadre (2) peut être associé à des moyens d'enregistrement et à un programme enregistré (SM) pour traiter les données collectées par celui-ci par rapport audit angle du véhicule.
